Europäisches Patentamt

(19) European Patent Office

Office européen des brevets

(11) Publication number: **0 175 338**
A2

(12) **EUROPEAN PATENT APPLICATION**

(21) Application number: 85111726.7

(22) Date of filing: 17.09.85

(51) Int. Cl.⁴: **A 01 N 33/12**

(30) Priority: 19.09.84 JP 197072/84
10.07.85 JP 153239/85
19.08.85 JP 182656/85

(43) Date of publication of application: 26.03.86
Bulletin 86/13

(84) Designated Contracting States: **CH DE FR GB IT LI**

(71) Applicant: Takeda Chemical Industries, Ltd., 27,
Doshomachi 2-chome Higashi-ku, Osaka-shi
Osaka, 541 (JP)

(72) Inventor: Higashide, Eiji, 5-19, Mukogawa-cho,
Takarazuka Hyogo 665 (JP)
Inventor: Jono, Kumiko, 36-203, 1 Terauchi 1-chome,
Toyonaka Osaka 560 (JP)

(74) Representative: von Kreisler, Alek, Dipl.-Chem. et al,
Deichmannhaus am Hauptbahnhof, D-5000 Köln 1 (DE)

(54) Disinfectants and antiseptics.

㊼ A disinfectant or antiseptic composition containing al-kyldimethylbenylammonium or a salt thereof in which a content of dodecyldimethylbenzylammonium or a salt thereof is at least about 80% by weight exhibits its germicidal activity widely against a broad spectrum of microorganisms in a short period with organic materials, as compared with the conventional benzalkonium chloride compositions. Further, when the above disinfectant or antiseptic composition is used in combination with one or more members selected from the group consisting of lower alcohols, chelating agents and amphoteric or nonionic surfactants, more significant bactericidal and disinfecting effect can be produced.

- 1 -

Disinfectants and Antiseptics

This invention relates to a disinfectant or antiseptic composition and a method of disinfection, which use alkyldimethylbenzylammonium or a salt thereof at least about 80% by weight of which is dodecyldimethylbenzylammonium or a salt thereof.

The chloride, for instance, of alkyldimethylbenzylammonium is called benzalkonium chloride (hereinafter sometimes abbreviated as BZK) or invert soap and is in wide use as a colorless and odorless, water-soluble disinfectant or antiseptic for medical and other purposes.

According to the tenth edition of the Japanese Pharmacopeia, the side-chain alkyl group of BZK in BZK solutions is a mixture of $C_8H_{17}$, $C_{10}H_{21}$, $C_{12}H_{25}$, $C_{14}H_{29}$, $C_{16}H_{33}$ and $C_{18}H_{37}$, with $C_{12}H_{25}$ and $C_{14}H_{29}$ prevailing in quantity. The ratio of the latter two is not specified. On the other hand, anlaysis of various samples of commercial BZK solutions for the contents of BZK having various side chains by high performance liquid chromatography (R. C. Meyer: J. Pharm. Sci., 69, 1148-1150, 1980) gave the following data: $C_{12}H_{25}$ BZK 59-63%, $C_{14}H_{29}$ BZK 29-34%, and $C_{16}H_{33}$ BZK 6-8%.

One of the general properties of disinfectants or antiseptics is that the contamination of organic substances such as blood reduces the germicidal activity. BZK is not an exception and it is reported that the presence of horse serum in a concentration of 10% reduces the germicidal activity to 1/2 to 1/4 (Heineman, P. G.: J. Amer. Pharm. Assoc., 26, 711, 1937).

In the case of disinfectants or antiseptics, unlike antibiotics, the appearance of resistant microbial strains is not easy since the germicidal effect is showed in a short period of time. With BZK, in particular, the time required for disinfection is very short, so that resistant strains hardly appear as compared with other disinfectants or antiseptics. However, in the case of products containing BZK as a main active ingredient which are currently on the market, microorganisms of the genera Alcaligenes, Achromobacter, and so forth may grow in solutions of BZK and contaminate relevant products if the production process, for instance, is defective (Japanese J. Bacteriol., 15, 1271, 1960).

While BZK is a disinfectant or an anitseptic. currently in wide use, the conventional compositions still remain to be improved, as also suggested by the above-mentioned findings.

One problem from the practical viewpoint is that since contamination with organic matter reduces the germicidal activity of the conventional compositions, the germicidal activity of BZK-based disinfectants or antiseptics is reduced in fields of use where said disinfectants or antiseptics are used frequently and have abundant opportunities to be contaminated with organic matters such as proteins, for example in medical treatments and in hand washing. With the conventional composition, microorganisms of the genera Alcaligenes, Achromobacter, etc. may sometimes grow and, accordingly, it is also very important from the practical veiewpoint to improve the disinfectant or antiseptic compositions in order that they can exhibit more effective germicidal activity against a broader spectrum of microorganisms than before.

Under these circumstances, the present inventors paid their attention to the fact that BZK species are variegated in the side-chain alkyl group and, after intensive investigations, found that the drawbacks of the conventional BZK compositions can be eliminated by using compositions containing dodecyldimethylbenzylammonium or a salt thereof in a content not less than a certain specified level. Further, the inventors found that when an appropriate quantity of ethyl alcohol, isopropyl aclcohol, sodium ethylenediaminetetraacetate or alkyldiaminoethylglycine hydrochloride is used in combination with the above disinfectant, still better germicidal effect can be obtained. The investigations have now resulted in completion of the present invention.

Thus, an object of the present invention is to provide a disinfectant or antiseptic composition comprising alkyldimethylbenzylammonium or a salt thereof in which a content of dodecyldimethylbenzylammonium or a salt thereof is at least about 80% by weight, and a method of disinfection using the above composition.

Further object of the present invention is to provide a disinfectant or antiseptic composition comprising alkyldimethylbenzylammonium or a salt thereof in which a content of dodecyldimethylbenzylammonium or a salt is at least 80% by weight, and one or more members selected from the group consisting of lower alcohols, chelating agents and amphoteric or nonioinic surfactants, and a method of disinfection, which comprises bringing an object of disinfection into contact with a liquid composition containing alkyldimethylbenzylammonium or a salt thereof in which a content of dodecyldimethylbenzylammonium or a salt thereof is at least about 80% by weight.

Hereinafter the agent "alkyldimethylbenzylammonium or a salt thereof in which a content of dodecyldimethylbenzylammonium or a salt thereof is at least about 80% by weight" is sometimes abbreviated collectively as "the ADBAC agent" for short.

Referring to the ADBAC agent, the dodecyldimethylbenzylammonium or salt thereof is obtainable by the conventional method and, in particular, the use of dodecyldimethylbenzylammonium chloride is advantageous. A feature of the ADBAC agent consists in that it contains at least about 80% by weight of dodecyldimethylbenzylammonium or a salt thereof as alkyldimethylbenzylammonium or a salt thereof. When the content of said dodecyl compound is about 83% by weight or more, still more favorable effect can be produced. There is no particular limit to said content. Generally, however, the highest content of said compound as attainable in the practice is up to 95% by weight. Various compounds of alkyldimethylbenzylammonium or a salt thereof other than the dodecyl compound include those in which the side-chain alkyl group is $C_8H_{17}$, $C_{10}H_{21}$, $C_{14}H_{29}$, $C_{16}H_{33}$ or $C_{18}H_{37}$, and the ADBAC agent may contain one or more of these.

Referring next to the lower alcohols, those containing 1 to 3 carbon atoms are generally used. In particular, ethyl alcohol and isopropyl alcohol are used with advantage. As regards the chelating agents, alkaline ones are generally preferred and there may be mentioend, for example, sodium ethylenediaminetetraacetate and polyphosphates (e.g. sodium polyphosphate, potassium polyphosphate). The amphoteric or nonionic surfactants include, among others, alkyldiaminoethylglycine hydrochloride (e.g. dodecylaminoethylglycine hydrochlroide, tetradecylaminoethylglycine hydrochloride) and glycerin fatty acid esters (e.g. glycerin monolaurate, glycerin monocaprate).

As for the proportion between the ADBAC agent and the above-mentioned ingredients for combined use in the disinfectant or antiseptic composition according to the invention, it is recommended that the lower alcohols are used, for example, in an amount of about 100 to 1,000,000 parts by weight, preferably about 800 to 800,000 parts by weight, in the case of disinfection of hands or medical apparatuses etc. more preferably about 3,000 to 30,000 parts by weight; the chelating agents, for example, in an amount of about 0.02 to 1,000 parts by weight, preferably about 0.2 to 500 parts by weight, in the case of disinfection of apparatuses or rooms more preferably about 10 to 200 parts by weight; and the amphoteric or nonionic surfactants, for example, in an amount of about 0.2 to 1,000 parts by weight, preferably about 0.5 to 200 parts by weight, in the case of disinfection of hands more preferably about 10 to 100 parts by weight, per 100 parts by weight of the ADBAC agent.

The disinfectant or antiseptic composition according to the invention is prepared in the powder, liquid or other form depending on the state of each ingredient for combined use. In preparing the composition, any of known methods can be employed. As the method of bringing the object into contact with the disinfectant or antiseptic, there may be used any of conventional methods, such as dipping, spraying, sprinkling, and washing.

In case that the ADBAC agent alone is used, it is required only bring an object to be sterilized into contact with an aqueous or alcoholic solution containing the ADBAC of about 0.1 to 10%, preferably 0.1 to 5% (weight/volume). In hand washing for disinfection, for instance, a concentration of the ADABC is preferably 0.1 to 5 %, more preferably 0.1 to 1 % (weight/volume).

On the other hand, in using the disinfectant or antiseptic composition which contains the ADBAC agent and at least one of the above ingredients for combined use, the composition is diluted with an appropriate solvent, for example water, to make an ADBAC agent concentration of about 0.01 to 5%, preferably about 0.02 to 3%, more preferably about 0.05 to 2% (weight/volume), as required, and an object to be sterilized is brought into contact with the dilution. Generally, the lower alcohols are used in a concentration of about 7 to 90%, preferably about 15 to 80%, more preferably about 15 to 30% (volume/volume); the chelating agents in a concentration of about 0.001 to 0.1%, preferably about 0.005 to 0.1%, more preferably about 0.05 to 0.1% (weight/volume); and the amphoteric or nonionic surfactants in a concentration of about 0.01 to 0.1%, preferably about 0.02 to 0.1%, more preferably about 0.05 to 0.1% (weight/volume).

The disinfection method according to the invention is generally carried out at a pH of about 6.5 to 8.5, preferably 7 to 8. Depending on the kind of object, for example in applying to medical apparatuses or equipment, or factories, it may be preferable from the effectiveness viewpoint to raise the pH to about 9 to 11, preferably 10 to 11. For the pH adjustme in taht case, an adequate alkaline agent may be used, for example an alkali metal hydroxide (e.g. soduim hydroxide, postassium hydroxide), an alkali metal carbonate (e.g. sodium carbonate, potassium carbonate, sodium hydrogen carbonate, potassium hydrogen carbonate).

The disinfectant or antiseptic composition according to the invention can be applied widely in various areas for the purpose of eliminating contamination with microorganisms. For instance, it can be used in disinfecting or sterilizing affected sites of human or animal body, various medical apparatuses and devices, medical equipment and institutions, hands, fingers barbers and beauty parlors, schools and other public institutions, houses (wall or floor etc.), vehicles, tableware, food processing factories, and other manufacturing facilities. As evidenced by the test examples to be described later herein, the composition can exhibit germicidal activity to a sufficient extent even in the admixture of organic matters. Therefore the composition can be applied more preferably in those cases where the use of disinfectant or antiseptic solutions is frequent, as in the medical field, or in disinfection of hands heavily contaminated with organic matters such as proteins.

The followings show preferable embodiments of a method of disinfection according to the present invention. An aqueous solution containing about 0.1 to 0.5% (weight/volume) of the ADBAC agent and about 0.05 to 0.1% of amphoteric or nonionic surfactants (e.g. alkyldiaminoethylglycine hydrochloride and/or glycerin fatty acid ester) can be preferably used as an antiseptic composition for hand washing of a doctor or a nurse and so on in case of an operation.

In the case of disinfection of hands, an aqueous solution containing about 0.1 to 0.5% (weight/volume) of the ADBAC agent, and about 15 to 30% (volume/volume) of lower alcohols (e.g. ethyl alcohol and/or isopropyl alcohol) and/or about 0.05 to 0.1% (weight/volume) of amphoteric or nonionic surfactants (e.g. alkyldiaminoethylglycine hydrochloride and/or glycerin fatty acid ester) can be preferably used without a rough skin. In treating hands for disinfection, for instance, 3 to 10 ml of a solution of the antiseptic composition is placed on the palm, followed by rubbing hands together to a sufficient extent, whereby contaminant micororganisms on hands can be killed. The contact time is selected taking into consideration the object, the use concentration of the antiseptic, and other factors. Generally recommendable is a period of about 10 seconds or more, preferably 1 minute or more.

The disinfection of medical apparatuses and devices (e.g. scissors, surgical knives) can be carried out by dipping them into an aqueous solution containing about 0.05 to 0.2% (weight/volume) of the ADBAC agent, and about 15 to 30% (volume/volume) of lower alcohols and/or about 0.05 to 0.1% (weight/volume) of chelating agents (e.g. sodium ethylenediaminetetraacetate and/or polyphosphate) for about 10 minutes or more. The disinfection of rooms or vehicles can be carried out by spraying an aqueous solution containing about 0.05 to 0.2 % (weight/volume) of the ADBAC agent, and about 0.05 to 0.1 % (weigh/volume) of chelating agents (e.g. sodium ethylendiaminetetra acetate and/or polyphosphate) according to a conventional spraying method

It is a characteristic feature of the disinfectant or antiseptic composition according to the invention that said composition exhibits its germicidal activity widely against a broad spectrum of microorganisms in a short period of time as compared with the conventional benzalkonium chloride compositions. Therefore, this composition can be applied in various fields requiring disinfection, in an advantageous manner from the practical viewpoint.

The invention is further characterized in that alkyldimethylbenzylammonium or a salt thereof in which a content of dodecyldimethylbenzylammonium or a salt thereof is at least about 80 % by weight is used in combination with one or more members selected from the group consisting of lower alcohols, chelating agents and amphoteric or nonionic surfactants. In such combined use, lower alcohols, chelating agents, or amphoteric or nonionic surfactants markedly increase the bactericidal and germicidal activity of the above-mentioned alkyldimethylbenzylammonium or a salt thereof even when they are used in concentrations at which, when used alone, they hardly show significant bactericidal and disinfecting effects. In concentrations at which they can exhibit germicidal activity in their single use, lower alcohols, chelating agents, or amphoteric or nonionic surfactants, when used with the above-mentioned alkyldimethylbenzylammonium or a salt thereof, increase the germicidal activity synergistically. Such synergism is very remarkable as compared with the case of alkyldimethylbenzylammonium or salts thereof of the conventional composition.

As a result, the method of disinfection according to the invention can be applied widely and effectively to a variety of objects and is advantageous from the practical viewpoint particularly in that the reduction in germicidal activity as resulting from the presence of organic matter in objects is slight.

The following test examples and working examples illustrate the invention in further detail.

In the following description, the abbreviations "95% $C_{12}$ BZK", "90% $C_{12}$ BZK", "84% $C_{12}$ BZK" and "83% $C_{12}$ BZK" means BZK species having respective alkyl side chains shown in the below Table.

| Abbreviation | $C_{12}H_{25}$ | $C_{14}H_{29}$ | $C_{16}H_{33}$ | Other alkyl (%) |
|---|---|---|---|---|
| 95% $C_{12}$ BZK | 95 | 3 | 1 | 1 |
| 93% $C_{12}$ BZK | 93 | 4 | 1 | 2 |
| 90% $C_{12}$ BZK | 90 | 6 | 2 | 2 |
| 84% $C_{12}$ BZK | 84 | 10 | 3 | 3 |
| 83% $C_{12}$ BZK | 83 | 13 | 2 | 1 |
| Osvan® | 60 | 30 | 8 | 1 |

Osvan®: Trademark of the commercial benzalkonium chloride (Takeda Chemical Industries, Ltd., Japan)

Test Example 1

Comparison in germicidal activity in various test organisms:

SCD medium (Daigo Nutritive Chemicals Ltd., Japan) was inoculated with one loopful of one of the test organisms given in Table 1, followed by incubation at 35°C for 20 hours. Commercial benzalkonium chloride, commercial chlorhexidine gluconate and those benzalkonium chloride species in which the alkyl side chain is $C_8H_{17}$, $C_{10}H_{21}$, $C_{12}H_{25}$, $C_{14}H_{29}$, $C_{16}H_{33}$ and $C_{18}H_{37}$, respectively, were tested for germicidal activity. Thus, each test solution having a specified concentration was inoculated with the above-mentioned culture of each test organism to a viable count of $10^6$ CFU/ml. After contacting at 25°C for 10 minutes, a 10-µl portion of the solution was transferred to 3 ml of SCDLP medium (Daigo Nutritive Chemicals Ltd.). The medium was incubated at 35°C for 72 hours. The bactericidal concentration is the lowest concentration at which the bacterial growth was not observed. As a result, it was noted, as seen in Table 1, that, in bactericidal activity, $C_{12}H_{25}$ BZK is comparable to or stronger than commercial BZK in the test organisms used except for Staphylococcus aureus against which it is slightly weaker in bactericidal activity than commercial BZK. Bactericidal activity of $C_{12}H_{25}$ BZK is comparable to or stornger than that of other BZK species except that $C_{14}H_{29}$ BZK, $C_{16}H_{33}$ BZK and $C_{18}H_{37}$ BZK are more active against Staphylococcus aureus. On the other hand, commercial chlorhexidine gluconate showed weaker bactericidal activity than BZK.

Table 1

Minimum bactericidal concentration (μg/ml)

| Test organism | Carbon number of alkyl group of benzalkonium chloride | | | | | | | Chlorhexidine gluconate |
|---|---|---|---|---|---|---|---|---|
| | Mixture* | $C_8$ | $C_{10}$ | $C_{12}$ | $C_{14}$ | $C_{16}$ | $C_{18}$ | |
| Staphylococcus aureus FDA 209P | 25 | >1000 | 500 | 50 | 25 | 12.5 | 25 | 400 |
| Pseudomonas aeruginosa IFO 3080 | 100 | 1000 | 500 | 50 | 50 | 100 | >400 | 200 |
| Pseudomonas cepacia TN 1943 | 200 | >1000 | 500 | 200 | 200 | 100 | 400 | >500 |
| Proteus mirabilis 82-1-4 | 200 | >1000 | 500 | 200 | 200 | 400 | 400 | 400 |
| Serratia marcescens 82-2-52 | 200 | >1000 | 800 | 200 | 200 | 200 | 400 | 500 |
| Flavobacterium sp. 82-1-98 | 200 | >1000 | 500 | 100 | 200 | >400 | >400 | 200 |
| Escherichia coli NIH JC-2 | 25 | 1000 | 400 | 25 | 25 | 25 | 100 | 100 |
| Achromobacter guttatis A-39 | 500 | >1000 | >1000 | 400 | 400 | >400 | >400 | 1000 |
| Alcaligenes feacalis 572 | 500 | >1000 | >1000 | 200 | 400 | >400 | >400 | 10000 |

\* Commercial benzalkonium chloride
(trademark: Osvan®)

Test Example 2

Influence of organic matter on bactericidal activity:

SCD medium (Daigo Nutritive Chemicals Ltd.) was inoculated with one loopful of the test organism _Staphylococcus aureus_ FDA209 and incubated overnight at 35°C. Test solutions containing a commercial liquid BZK composition or any of liquid BZK compositions of 83% $C_{12}$ BZK, 90% $C_{12}$ BZK or 95% $C_{12}$ BZK, in concentrations of 1,000 µg/ml, 800 µg/ml, 500 µg/ml, 400 µg/ml and 200 µg/ml were prepared. Sterilized raw yeast (Oriental Yeast Co., Ltd., Japan) was suspended in the solutions to a concentration of 5%. After 30 minutes of treatment, the test organism was added to each test solution in an amount to give $10^5$ CFU/ml. Again after 30 minutes of treatment, each mixture was 10-fold diluted with SCDLP medium (Daigo Nutritive Chemicals Ltd.) to thereby render the disinfectant inactive. An SCDLP agar plate was smeared with the dilution using a Spiral plater (Spiral System Instrument Corp. USA) and incubated at 35°C for 42 hours. After incubation, the viable count (colony count) was measured for bactericidal activity comparison among the disinfectants. In the case of commercial BZK, the viable count was 0 (zero) at 800 µg/ml, and a viable count of 0.01% was obtained at 500 µg/ml. On the other hand, the BZK compositions of 83% $C_{12}$ BZK, 90% $C_{12}$ BZK and 95% $C_{12}$ BZK, respectively, attained complete disinfection (viable count: 0) at 500 µg/ml and a viable count of 0.01% at 400 µg/ml. It was thus revealed that the BZK compositions containing $C_{12}H_{25}$ BZK in a content of not less than 80% show stronger bactericidal activity as compared with commercial BZK compositions in an organic matter-contaminated condition.

Test Example 3

SCD medium was inoculated with one loopful of one of various test organisms (cf. Table 1), followed by incubation at 35°C for 20 hours. Test solutions having various concentrations of commercial benzalkonium chloride (Osvan®) and $C_{12}H_{25}$, $C_{14}H_{29}$ and $C_{16}H_{33}$ side chain species of benzalkonium chloride, respectively, were prepared. Dried yeast (dried yeast of the Japanese Pharmacopeia grade; Asahi Breweries Limited, Japan) was added to each test solution to a concentration of 2.5% and then the resultant suspension was inoculated with the above-mentioned culture of each test organism to $10^6$ CFU/ml. The contact temperature was 25°C and the contact time was 10 seconds, 30 seconds or 1 minute. After the lapse of the contact time, a 0.5-ml portion of the mixture was transferred to SCDLP medium. After inactivation of the disinfectant or antiseptic, each diluted test solution was used for smearing a SCDLP agar plate with a Spiral plater. After incubation at 35°C for 24 hours, the resultant colonies were counted (viable count). The lowest concentration at which the viable count was 0 was recorded as the minimum bactericidal concentration.

As shown in Table 2, the data obtained indicated that, for all the strains used ($10^6$ U/ml), the viable count for the concentration 5 mg/ml becomes 0 after one-minute contact with $C_{12}H_{25}$ BZK. Commercial benzalkonium chloride, $C_{14}H_{29}$ BZK and $C_{16}H_{33}$ BZK showed no difference from $C_{12}H_{25}$ BZK in bactericidal activity against <u>Staphylococcus aureus</u> or <u>Staphylococcus epidermis</u>, whereas, in other test organisms, $C_{12}H_{25}$ BZK exhibited bactericidal activity in a shorter period and in a lower concentration.

Table 2

| Test organism | Osvan® (mg/ml) | | | $C_{12}$ (mg/ml) | | | $C_{14}$ (mg/ml) | | | $C_{16}$ (mg/ml) | | |
|---|---|---|---|---|---|---|---|---|---|---|---|---|
| Carbon numbers of alkyl group / Contact time | 10" | 30" | 1' | 10" | 30" | 1' | 10" | 30" | 1' | 10" | 30" | 1' |
| Pseudomonas aeruginosa IFO 13736 | 10 | 10 | 5 | 10 | 5 | 5 | >10 | >10 | 10 | >10 | >10 | >10 |
| Pseudomonas aeruginosa 82-2-32 | >10 | 5 | 5 | 10 | 5 | 5 | >10 | >10 | 10 | >10 | >10 | >10 |
| Pseudomonas cepacia ATCC 17774 | >10 | 10 | 5 | >10 | 10 | 5 | >10 | >10 | >10 | >10 | >10 | >10 |
| Pseudomonas cepacia H130 | >10 | 10 | 5 | 10 | 5 | 5 | >10 | >10 | >10 | >10 | >10 | >10 |
| Proteus mirabilis IFO 21100 | >10 | 5 | 5 | 10 | 5 | 5 | >10 | 10 | 5 | >10 | >10 | >10 |
| Proteus mirabilis 82-1-4HR | >10 | 10 | 5 | >10 | 5 | 5 | >10 | >10 | >10 | >10 | >10 | >10 |
| Serratia marcescens 82-2-52 | >10 | >10 | 5 | >10 | 5 | 5 | >10 | >10 | >10 | >10 | >10 | >10 |
| Achromobacter guttatis A-39 | >10 | >10 | >10 | 10 | 10 | 5 | >10 | >10 | >10 | >10 | >10 | >10 |
| Alcaligenes faecalis 572 | >10 | >10 | 10 | >10 | 10 | 5 | >10 | >10 | >10 | >10 | >10 | >10 |
| Staphylococcus aureus FDA 209P | 5 | 5 | 5 | 5 | 5 | 5 | 5 | 5 | 5 | 5 | 5 | 5 |
| Staphylococcus aureus IFO 3762 | 5 | 5 | 5 | 5 | 5 | 5 | 5 | 5 | 5 | 5 | 5 | 5 |

Test Example 4

Achromobacter guttatis A-39 and Alcaligenes faecalis 572 were used as test organisms. A medium (hereinafter, 1/50 SCD) prepared by diluting SCD medium (Daigo Nutritive Chemicals, Ltd.) to 1/50 was inoculated with one loopful of the test organism and incubated at 30°C for 3 days. Commercial benzalkonium chloride (Osvan®), 95% $C_{12}$ BZK and 83% $C_{12}$ BZK were tested for germicidal activity by the following method.

Thus, disinfectant or antiseptic solutions differing in BZK concentration from 50 µg/ml to 10 mg/ml were prepared by adding one of the above disinfectants or antiseptics to 0%, 7%, 15% or 30% ethyl alcohol-containing 1/50 SCD. Each of these test solutions was inoculated with the above-mentioned culture to a viable count of $10^6$ CFU/ml. In this manner, the test organism was brought into contact with the test solution at 25°C for 1 minute or 10 minutes. Directly after the lapse of the contact time, a 500-µl portion of the inoculated solution was taken and transferred to 10 ml of SCDLP medium (Daigo Nutritive Chemicals, Ltd.). While a portion thereof was examined for the viable count on an SCDLP agar plate, the medium was incubated at 35°C for 72 hours and, then, examined for the growth or no growth of the test organism. The bactericidal concentration is the lowest concentration at which the presence of living bacteria was not observed.

The results of this test are shown in Table 3 (1) and Table 3 (2). It was noted, as clearly seen from the results, that 95% $C_{12}$ BZK and 83% $C_{12}$ BZK are very high in germicidal effect in the combined use with ethyl alcohol as compared with commercial benzalkonium chloride.

Table 3 (1)

| | Bactericidal concentration (mg/ml) | | | |
|---|---|---|---|---|
| Ethanol added<br>BZK | 0 | 7% (v/v) | 15% (v/v) | 30% (v/v) |
| Commercial benzalkonium chloride | 2.5 | 2.5 | 1 | 1 |
| 95% $C_{12}$ BZK | 1 | 0.5 | 0.25 | 0.25 |
| 83% $C_{12}$ BZK | 1 | 0.5 | 0.25 | 0.25 |

Test organism: Achromobacter guttatis A-39
(contact time: 1 minute)

Table 3 (2)

| | Bactericidal concentration (mg/ml) | | | |
|---|---|---|---|---|
| Ethanol added<br>BZK | 0 | 7% (v/v) | 15% (v/v) | 30% (v/v) |
| Commercial benzalkonium chloride | 5 | 5 | 4 | 3 |
| 95% $C_{12}$ BZK | 2.5 | 1 | 0.5 | 0.25 |
| 83% $C_{12}$ BZK | 2.5 | 1 | 0.5 | 0.25 |

Test organism: Alcaligenes faecalis 572
(contact time: 10 minutes)

Test·Example 5

The hand washing test was performed by the glove-juice method. In 5 volunteers, the microbial counts on the hands (baseline values) before disinfection were measured essentially by the method of Kamiki [T. Kamiki, Geka Shinryo (Surgical Diagnostics and Treatment), 25 (2), 256-261, 1983]. Then, 50% aqueous ethyl alcohol solutions containing 0.1% of commercial benzalkonium chloride, 95% $C_{12}$ BZK and 83% $C_{12}$ BZK, respectively, and 50% aqueous ethyl alcohol alone (as a control) were tested for disinfecting effect. 5 ml of each solution was transferred onto the palm and then rubbed against the whole hands, followed by massage until the hands became dry. This procedure was repeated three times in all. The treated hands were tested for microbial count in the same manner as mentioned above. The term "microbial count reduction" as used herein means the value resulting from the subtraction of 100 from the percentage value corresponding to the value resulting from the division of the microbial count detected after disinfection by the baseline value. The results obtained are shown in Table 4.

The microbial count reduction values are each the mean of 5 measurements. It was shown that, in the combined use with ethyl alcohol, 95% $C_{12}$ BZK and 83% $C_{12}$ BZK produce synergistically increased effect (microbial count-reducing effect) as compared with commercial benzalkonium chloride.

Table 4

| | Disinfectant | Microbial count reduction (%) |
|---|---|---|
| 50% Aqueous ethyl alcohol | Commercial benzalkonium chloride 0.1% | 60.6 |
| | 95% $C_{12}$ BZK 0.1% | 75.4 |
| | 83% $C_{12}$ BZK 0.1% | 72.0 |
| | 50% Ethyl alcohol alone | 30.4 |
| Aqueous solution | Commercial benzalkonium chloride 0.1% | 55.1 |
| | 95% $C_{12}$ BZK 0.1% | 60.1 |
| | 83% $C_{12}$ BZK 0.1% | 59.9 |

Test Example 6

Using the same BZK species and test organisms as used in Test Example 4, bactericidal activity testing was performed in 0%, 15% or 30% isopropyl alcohol-containing 1/50 SCD. The procedure was the same as that of Test Example 4.

As is clear from the results shown in Table 5, it was noted that 95% $C_{12}$ BZK and 83% $C_{12}$ BZK, in the presence of 15% or 30% isopropyl alcohol, exhibit synergistically increased bactericidal activity as compared with commercial benzalkonium chloride.

Table 5 (1)

| | Contacting solution<br>BZK | Bactericidal concentration (mg/ml) | | |
|---|---|---|---|---|
| | | 1/50 SCD solution | 15% Isopropyl alcohol-added 1/50 SCD | 30% Isopropyl alcohol-added 1/50 SCD |
| Commercial benzalkonium chloride | | 2.5 | 1 | 0.75 |
| 95% $C_{12}$ BZK | | 1 | 0.25 | 0.25 |
| 83% $C_{12}$ BZK | | 1 | 0.25 | 0.25 |

Test organism: <u>Achromobacter guttatis</u> A-39
(contact time: 1 minute)

Table 5 (2)

| | Contacting solution<br>BZK | Bactericidal concentration (mg/ml) | | |
|---|---|---|---|---|
| | | 1/50 SCD solution | 15% Isopropyl alcohol-added 1/50 SCD | 30% Isopropyl alcohol-added 1/50 SCD |
| Commercial benzalkonium chloride | | 5 | 5 | 3 |
| 95% $C_{12}$ BZK | | 2.5 | 1 | 0.25 |
| 83% $C_{12}$ BZK | | 2.5 | 1 | 0.25 |

Test organism: <u>Alcaligenes faecalis</u> 572
(contact time: 10 minutes)

Test Example 7

One loopful of <u>Pseudomonas cepacia</u> TN1943 or <u>Serratia marcescens</u> 82-2-52 as taken from a slant culture was used for inoculation of SCD medium (Daigo Nutritive Chemicals Ltd.), followed by incubation at 35°C for 20 hours. 1/50 SCD solutions containing commercial benzalkonium chloride, 95% $C_{12}$ BZK and 83% $C_{12}$ BZK, respectively, each in combination with tetrasodium ethylenediaminetetraacetate or alkyldiaminoethylglycine hydrochloride were tested for bactericidal activity. Thus, each test solution was inoculated with the above culture to about $10^5$ CFU/ml. After contacting for 15 seconds or 5 mintues, the solution was diluted 20 times with SCDLP medium (Daigo Nutritive Chemicals Ltd.) to thereby render the disinfectant inactive. For bactericidal activity evaluation, the solution was examined for viable count. The results obtained in this manner are shown in Table 6.

Table 6

| Test organism | Bactericide (concentration) Coexisting agent | Viable count (CFU/ml) | | | | | | | |
|---|---|---|---|---|---|---|---|---|---|
| | | 1/50 SCD solution alone | | Commercial benzalkonium chloride (100 µg/ml) | | 95% $C_{12}$ BZK (100 µg/ml) | | 83% $C_{12}$ BZK (100 µg/ml) | |
| | | 15 sec | 5 min | 15 sec | 5 min | 15 sec | 5 min | 15 sec | 5 min |
| Pseudomonas cepacia TN1943 | − | $2\times10^5$ | $2\times10^5$ | $2.5\times10^5$ | $5.2\times10^4$ | $2.4\times10^4$ | $7.6\times10^3$ | $2.5\times10^4$ | $7.2\times10^3$ |
| | EDTA·4Na* 0.01% | $2.1\times10^5$ | $1\times10^5$ | $6.8\times10$ | $10$ | $10$ | $0$ | $10$ | $0$ |
| | ADEG** 0.02% | $5.6\times10^5$ | $8.7\times10^4$ | $3.2\times10^4$ | $1.1\times10^2$ | $3.2\times10^3$ | $<10$ | $3.6\times10^3$ | $<10$ |
| Serratia marcescens 82-2-52 | − | $1.7\times10^5$ | $1.5\times10^5$ | $7.5\times10^4$ | $1.8\times10^4$ | $3.5\times10^4$ | $8.8\times10^3$ | $3.7\times10^4$ | $8.8\times10^3$ |
| | EDTA·4Na* 0.01% | $1.6\times10^5$ | $1.3\times10^5$ | $1.5\times10^2$ | $10$ | $10$ | $0$ | $10$ | $0$ |
| | ADEG** 0.02% | $1.2\times10^5$ | $5.8\times10^4$ | $5.8\times10^4$ | $7.4\times10^2$ | $2.6\times10^3$ | $1.1\times10$ | $2.5\times10^3$ | $1.1\times10$ |

* Tetrasodium ethylenediaminetetraacetate

** Alkyl diethylaminoethylglycine hydrochloride (trademark: Tego 51, product from Th. Goldschmidt, West Germany)

Example 1

A 50% (w/v) aqueous solution of 84% $C_{12}$ BZK was diluted with bacterially filtered tap water so as to give 10, 5, 1, 0.5, 0.2 and 0.1% (w/v) BZK solutions. The solutions were tested for bactericidal activity against Pseudomonas cepacia TN 1943 ($10^5$ CFU/ml). The contact time was 10 minutes. No colony formation was observed in a 200 µg/ml solution.

Example 2

A 50% (w/v) aqueous solution of 93% $C_{12}$ BZK was diluted with bacterially filtered tap water so as to give 10, 5, 1, 0.5, 0.2 and 0.1% (w/v) BZK solutions. These preparations were tested for bactericidal activity against Pseudomonas cepacia TN 1943, the contact time being 10 minutes. Complete kill of bacteria was observed in a 200 µg/ml solution.

Example 3

A 50% (w/v) aqueous solution of 95% $C_{12}$ BZK was diluted by pouring thereinto 95% aqueous ethyl alcohol and water, and solutions containing 30% of ethyl alcohol, and 2%, 1%, 0.5%, 0.2% and 0.1% (w/v), respectively, of BZK were prepared. A 5-ml portion of each preparation was taken on the palm, followed by thorough rubbing. After three repetitions of this disinfecting procedure, the microbial count reduction was determined. In each case, it was not less than 50%.

Example 4

A 50% (w/v) aqueous solution of 83% $C_{12}$ BZK was diluted by pouring thereto 95% aqueous ethyl alcohol, and solutions containing 50% of ethyl alcohol, and 2%, 1%, 0.5%, 0.2% and 0.1% (w/v), respectively, of BZK were prepared. A 5-ml portion of each preparation was taken on the palm, followed by thorough rubbing. After three repetitions of this disinfecting procedure, the microbial count reduction was determined. In each case, it was not less than 50%.

Example 5

A 50% (w/v) aqueous solution of 83% $C_{12}$ BZK was diluted by pouring thereinto 95% aqueous isopropyl alcohol and water, and solutions containing 20% of isopropyl alcohol, and 2%, 1%, 0.5%, 0.2% and 0.1% (w/v), respectively, of BZK were prepared. A 5-ml portion of each preparation was taken on the palm, followed by thorough rubbing. After three repetitions of this disinfecting procedure, the microbial count reduction was determined. In each case, it was not less than 50%.

Example 6

A 50% (w/v) aqueous solution of 95% $C_{12}$ BZK was diluted by pouring thereinto 95% aqueous ethyl alcohol. While adjusting the ethyl alcohol content to 30% and further dissolving tetrasodium ethylenediaminetetraacetate, there were prepared solutions containing 0.001% of tetrasodium ethylenediaminetetraacetate, and 1%, 0.2% and 0.1% (w/v), respectively, of BZK, together with 30% of ethyl alcohol. A 5-ml portion of each preparation was taken on the palm, followed by thorough rubbing. After three repetitions of this disinfecting procedure, the microbial count reduction was determined. In each case, it was not less than 50%.

Example 7

A 50% (w/v) aqueous solution of 83% $C_{12}$ BZK was diluted by pouring thereinto 95% isopropyl alcohol and, while adjusting the isopropyl alcohol content to 40% and further dissolving 30% alkyldiethylaminoglycine hydrochloride (trademarked Tego 51, containing 18% of dodecylaminoethylglycine hydrochloride and 12% of tetradecylaminoethylglycine hydrochloride), solutions containing 0.02% of alkyldiethylaminoethylglycine hydrochloride, 1%, 0.2% and 0.1% (w/v), respectively, of BZK, and 40% of isopropyl alcohol were prepared. A 5-ml portion of each preparation was taken on the palm, followed by thorough rubbing. After three repetitions of this disinfecting procedure, the microbial count reduction was determined. In each case, it was not less than 50%.

Example 8

By dissolving tetra sodium ethylenediaminetetraacetate in a 50% (w/v) aqueous solution of 83% $C_{12}$ BZK, there were prepared solutions containing 0.1% of tetrasodium ethylenediaminetetraacetate, and 2%, 1%, 0.5%, 0.2% and 0.1% (w/v), respectively, of BZK. A 5-ml portion of each preparation was taken on the palm, followed by thorough rubbing. After three repetitions of this disinfecting procedure, the microbial count reduction was determined. In each case, it was not less than 50%.

Example 9

By dissolving 30% alkyldiethylaminoethylglycine hydrochloride in a 50% (w/v) aqueous solution of 95% $C_{12}$ BZK, there were prepared solutions containing 0.1% of alkyldiethylaminoethylglycine hydrochloride, and 2%, 1%, 0.5%, 0.2% and 0.1% (w/v), respectively, of BZK. A 5-ml portion of each preparation was taken on the palm, followed by thorough rubbing. After three repetitions of this disinfecting procedrue, the microbial count reduction was determined. In each case, it was not less than 50%.

Example 10

A 50% (w/v) aqueous solution of 95% $C_{12}$ BZK was diluted by pouring thereinto 95% aqueous ethyl alcohol and water, and solutions containing 15% of ethyl alcohol, and 2%, 1%, 0.5%, 0.2% and 0.1% (w/v), respectively, of BZK were prepared. A 5-ml portion of each preparation was taken onto the palm, followed by thorough rubbing. After three repetitions of this disinfecting procedure, the microbial count reduction was determined. In each case, it was not less than 50%.

Example 11

A 50% (w/v) aqueous solution of 83% $C_{12}$ BZK was diluted by pouring thereinto 95% aqueous ethyl alcohol and water, and solutions containing 20% of ethyl alcohol, and 2%, 1%, 0.5%, 0.2% and 0.1% (w/v), respectively, of BZK were prepared. A 5-ml portion of each preparation was taken onto the palm, followed by thorough rubbing. After three repetitions of this disinfecting procedure, the microbial count reduction was determined. In each case, it was not less than 50%.

Example 12

A 50% (w/v) aqueous solution of 95% $C_{12}$ BZK was diluted by pouring thereinto 95% aqueous ethyl alcohol and water. While adjusting the ethyl alcohol content to 15% and further dissolving tetrasodium ethylenediaminetetraacetate, there were prepared solutions containing 0.05% of tetrasodium ethylenediaminetetraacetate, and 1%, 0.5%, 0.2% and 0.1% (w/v), respectively, of BZK, together with 15% of ethyl alcohol. A 5-ml portion of each preparation was taken on the palm, followed by thorough rubbing. After three repetitions of this disinfecting procedure, the microbial count reduction was determined. In each case, it was not less than 50%.

Example 13

A 50% (w/v) aqueous solution of 83% $C_{12}$ BZK was diluted by pouring thereinto water and 95% isopropyl alcohol and, while adjusting the isopropyl alcohol content to 15% and further dissolving 30% alkyldiethylaminoglycine hydrochloride (trademarked Tego 51; an aqueous solution containing 18% of dodecylaminoethylglycine hydrochloride and 12% of tetradecylaminoethylglycine hydrochloride), solutions containing 0.05% of alkyldiethylaminoethylglycine hydrochloride, 1%, 0.5%, 0.2% and 0.1% (w/v), respectively, of BZK, and 15% of isopropyl alcohol were prepared. A 5-ml portion of each preparation was taken on the palm, followed by thorough rubbing. After three repetitions of this disinfecting procedure, the microbial count reduction was determined. In each case, it was not less than 50%.

Example 14

By dissolving tetrasodium ethylenediaminetetraacetate in a 50% (w/v) aqueous solution of 83% $C_{12}$ BZK, there were prepared solutions containing 0.1% of tetrasodium ethylenediaminetetraacetate, and 2%, 1%, 0.5%, 0.2% and 0.1% (w/v), respectively, of BZK. Each preparation was sprayed in the room, and after 10 minutes the microbial count reduction was determined. In each case, it was not less than 90%.

Example 15

By dissolving 30% alkyldiethylaminoethylglycine hydrochloride in a 50% (w/v) aqueous solution of 95% $C_{12}$ BZK, there were prepared solutions containing 0.05% of alkyldiethylaminoethylglycine hydrochloride, and 2%, 1%, 0.5%, 0.2% and 0.1% (w/v), respectively, of BZK. A 5-ml portion of each preparation was taken on the palm, followed by thorough rubbing. After three repetitions of this disinfecting procedure, the microbial count reduction was determined. In each case, it was not less than 50%.

Example 16

A 50% (w/v) aqueous solution of 83% $C_{12}$ BZK was diluted with tap water and sodium polyphosphate was dissolved thereinto, and solutions containing 0.1% (w/v) of sodium polyphosphate, and 1%, 0.5%, 0.2% and 0.1% (w/v), respectively, of BZK were prepared. A 2 $\ell$ portion of each preparation was taken into a stainless vessel, and then medical appliances such as scissors and surgical knives were dipped for 10 minutes. After this disinfecting procedure, the microbial count reduction was determined. In each case, it was not less than 90%.

Example 17

A 50% (w/v) aqueous solution of 83% $C_{12}$ BZK was diluted by pouring thereinto water and isopropyl alcohol. While adjusting the isopropyl alcohol content to 15% w/v and further dissoving tetrasodium ethylenediaminetetraacetate, there were prepared solutions containing 0.05% (w/v) of tetrasodium ethylenediaminetetraacetate, and 1%, 0.5%, 0.2% and 0.1% (w/v), respectively, of BZK, together with 15% of isopropyl alcohol. A 2 $\ell$ portion of each preparation was taken into a synthetic resin vessel, and then medical appliances such as scissors and surgical knives were dipped for 10 minutes. After this disinfecting procedure, the microbial count reduction was determined. In each case, it was not less than 90%.

Example 18

By dissolving glycerin monolaurate in a 50% (w/v) aqueous solution of 95% $C_{12}$ BZK, there were prepared solutions containing 0.05% of glycerin monolaurate, and 2%, 1%, 0.5%, 0.2% and 0.1% (w/v), respectively, of BZK. A 5-ml portion of each preparation was taken on the palm, followed by thorough rubbing. After three repetitions of this disinfecting procedure, the microbial count reduction was determined. In each case, it was not less than 50%.

What we claim is:

1. A disinfectant or antiseptic composition comprising alkyldimethylbenzylammonium or a salt thereof in which a content of dodecyldimethylbenzylammonium or a salt thereof is at least about 80% by weight.

2. A disinfectant or antiseptic composition comprising alkyldimethylbenzylammonium or a salt thereof in which a content of dodecyldimethylbenzylammonium or a salt thereof is at least about 80% by weight, and one or more members selected from the group consisting of lower alcohols, chelating agents and amphoteric or nonionic surfactants.

3. The composition according to Claims 1 or 2, ehrein the salt is chloride.

4. The composition according to Claim 3, wherein the content of dodecyldimethylbenzylammonium or a salt is about 83 to 95% by weight.

5. The composition according to Claims 1 - 4, wherein the lower alcohol is ethyl alcohol and/or isopropyl alcohol.

6. The composition according to Claims 2 to 4, wherein the chelating agent is sodium ethylenediaminetetraacetate and/or polyphosphate.

7. The composition according to claims 2 to 4, wherein the amphoteric surfactant is alkyldiaminoethylglycine hydrochloride.

8. The composition according to claims 2 to 4, wherein the nonionic surfactant is glycerin fatty acid esters.

9. The composition according to claims 2 to 5, wherein an amount of the lower alcohol is about 800 to 800,000 parts by weight per 100 parts by weight of the alkyldimethylbenzylammonium or a salt thereof ,
preferably about 3,000 to 30,000
parts by weight per 100 parts by weight of the alkyldimethylbenzylammonium or a salt thereof.

10. The composition according to claims 2-4 and 6,hwerein
an amount of the chelating agent is about 0.2 to 500
parts by weight per 100 parts by weight of the alkyldimethylbenzylammonium or a salt thereof ,
preferably about 10 to 200
parts by weight per 100 parts by weight of the alkyldimethylbenzylammonium or a salt thereof.

11. The composition according to claims 2-4 and 7-8, wherein
an amount of the amphoteric or nonionic surfactant is
about 0.5 to 200 parts by weight per 100 parts by weight
of the alkyldimethylbenzylammonium or a salt thereof ,
preferably about 10 to 100 parts by weight per 100 parts by weight
of the alkyldimethylbenzylammonium or a salt thereof.

12. A method of disinfection, which comprises
bringing an object of disinfection into contact with a
liquid composition containing at least one desinfectant
or antisepctic composition according to anyone of claims 1,
3 and 4.

13. The method according to Claim 12, wherein the
content of dodecyldimethylbenzylammonium or a salt thereof in
the liquid composition is about 0.1 to 5% (weight/ volume).

14.    A method of disinfection, which comprises bringing an object of disinfection into contact with a liquid composition containing at least one disinfectant or antiseptic composition according to anyone of claims 2 to 11.

15.    The method according to claim 14, wherein the liquid composition contains about 0,02 to 3 % (weight/volume) of alkyldimethylbenzylammonium or a salt thereof in which a content of dodecyldimethylbenzylammonium or a salt thereof is at least about 80 % by weight.

16.    The method according to claims 14 and 15, wherein the liquid composition contains about 15 to 30 % (volume/volume) of lower alcohols.

17.    The method according to claims 14 and 15, wherein the liquid composition contains about 0,05 to 0,1 % /weight/volume) of chelating agents.

18.    The method according to claims 14 and 15, wherein the liquid composition contains about 0,05 to 0,1 % (weight/volume) of amphoteric or noionic surfactants.